# EUROPEAN PATENT APPLICATION

(11) **EP 3 968 231 A1**
(43) Date of publication of application: **16.03.2022**
(21) Application number: 20196165.3
(22) Date of filing: 15.09.2020
(51) Int. Cl.: G06N 3/00, G06N 5/02, G06N 20/00

(54) **ACTIVE LEARNING AGENT FOR LEARNING AT LEAST ONE STRATEGY**

(71) Applicant: Siemens Aktiengesellschaft, 80333 München (DE)
(72) Inventor: Yee, Dianna, 81825 München (DE); Joblin, Mitchell, 81825 München (DE)

(57) **Abstract**

The invention is directed Active learning agent (1) for learning at least one strategy, comprising a. an input interface (10), configured for receiving an input data set; comprising a plurality of labelled sample pairs and a plurality of unlabelled sample pairs; wherein the input data set is associated with a semi-supervised machine learning model; b.
a transforming unit, configured for transforming the received input data set into a transformed input data set in form of a transition matrix or knowledge graph; and c.an active learning unit (20), configured for learning at least one strategy based on the transformed input data set using reinforcement learning; wherein the at least one strategy is a strategy for selecting an output subset of the plurality of unlabelled sample pairs of the input data set; and d. an output interface, configured for providing the output subset. Further, the invention relates to a technical system.

## Description

### 1. Technical field

The present invention relates to an active learning agent for learning at least one strategy. Further, the invention relates to a corresponding technical system.

### 2. Prior art

Increasing digitalization and automation of processes have driven the need for labelled data. For example, business units in e.g. context of Industry 4.0 or other technical fields require labelled data. The labelled data is necessary for diverse machine learning tasks, including supervised machine learning.

Usually, prior art approaches resort to unsupervised machine learning due to the lack of labelled data. However, in this case, it is impossible to incorporate direct feedback from domain experts. Hence, it can't be ensured that the machine learning model predictions are coherent to domain expert opinions.

Therefore, according to prior art, domain experts have to provide the labelled data resulting in manual effort to overcome such limitations. Alternatively, the manual labelling effort can be commissioned, but often this is a challenging task, as it still relies on the domain expert to select the relevant samples to label which will be useful for the machine learning models.

The disadvantage is that the manual labelling effort by domain experts is time-consuming and expensive. In other words, it is resource intensive to have the domain expert label all data and domain experts often lack the knowledge on how to select relevant samples from the data to label.

Moreover, during the productive phase of the machine learning models, even more unlabelled data will be generated. The need for labelling uncertain observations will be necessary in order to monitor and trigger re-training of the machine learning models. Retraining is needed such that the new models are adjusted to account for any deviation between the current environment and the environment during training time.

It is therefore an objective of the invention to provide an active learning agent for learning at least one strategy in an efficient and reliable manner.

### 3. Summary of the invention

This problem is according to one aspect of the invention solved by an active learning agent for learning at least one strategy, comprising:
a. an input interface, configured for receiving an input data set; comprising
   a plurality of labelled sample pairs and a plurality of unlabelled sample pairs; wherein
   the input data set is associated with a semi-supervised machine learning model;
b. a transforming unit, configured for transforming the received input data set into a transformed input data set in form of a transition matrix or knowledge graph; and
c. an active learning unit, configured for learning the at least one strategy based on the transformed input data set using reinforcement learning; wherein the at least one strategy is a strategy for selecting an output subset of the plurality of unlabelled sample pairs of the input data set; and
d. an output interface, configured for providing the output subset.

Accordingly, the active learning agent comprises an active learning unit. The active learning unit learns the at least one strategy on the basis of a transformed input data set using reinforcement learning. Thereby, the term "strategy" can be equally referred to as policy. The transformed input data set is either a transition matrix or a knowledge graph.

The active learning agent uses reinforcement learning according to the invention and thus associative learning. In other words, the active learning agent learns an optimal strategy or policy which nominates a subset of the input data set to label or other applications. The strategy is designed to be less susceptible to correlations within the elected query candidates compared to prior art. Thereby, pair-wise similarities between different sample pairs are considered. Hence, the reinforcement learning-based active learning method has sufficient information to optimize the subset of elected query candidates to be more efficient in candidate selection.

The main advantage of posing the active learning task as a reinforcement learning task is that the learned strategy is optimal for the considered input data set.

Moreover, reinforcement learning performs better than common deterministic functions. The term "function" can be equally referred to as heuristic. Examples of such known functions include uncertainty sampling, query by committee, expected model change, variance and estimated error reduction. The disadvantage is that the deterministic functions according to prior art are designed by humans and are thus error-prone and not reliable. Further, the deterministic functions are not uniquely optimal for all datasets.

In traditional active learning methods a selection heuristic is computed and then ranked. This approach results in multiple selected query candidates which are similar since they have similar selection heuristics. In batch-mode active learning methods where a batch of elected query candidates are proposed by the active learning method, it is inefficient to have correlations within the elected query candidates.

The learned strategy is designed for selecting an output subset of the plurality of unlabelled sample pairs of the input data set. The term "selection" can also be referred to as "election" or "filtering" a subset of data from a set of data. The selected output subset of the plurality of unlabelled sample pairs of the input data set can be used as input for diverse use cases or applications, see further below, such as labelling.

In one embodiment the transformed input data set is a knowledge graph.

In one embodiment the strategy is a policy-guided walk on the knowledge graph which is optimized to traverse the knowledge graph. This way, unlabeled samples for labelling can be found and nominated.

A further aspect of the invention is a corresponding technical system comprising the aforementioned active learning agent.

The units may be realized as any devices, or any means, for computing, in particular for executing a software, an app, or an algorithm. For example, the units may consist of or comprise a central processing unit (CPU) and/or a memory operatively connected to the CPU. The units may also comprise an array of CPUs, an array of graphical processing units (GPUs), at least one application-specific integrated circuit (ASIC), at least one field-programmable gate array, or any combination of the foregoing. The units may comprise at least one module which in turn may comprise software and/or hardware. Some, or even all, modules of the unit may be implemented by a cloud computing platform.

### 4. Short description of the drawings

In the following detailed description, presently preferred embodiments of the invention are further described with reference to the following figures:
- Fig. 1: illustrates a system diagram for training the active learning agent's policy according to the invention.
- Fig. 2: illustrates a state space in the form of a knowledge graph according to an embodiment.
- Fig. 3: illustrates the action space of the active learning agent according to an embodiment.
- Fig. 4: illustrates a policy network constructed using sequence neural networks according to an embodiment.

### 5. Detailed description of preferred embodiments

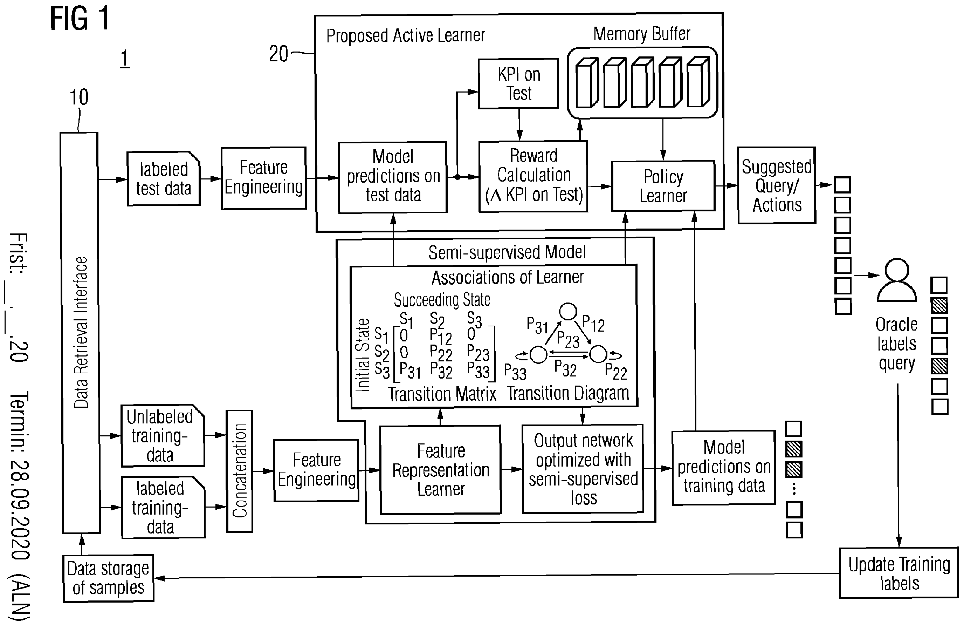

Fig. 1 illustrates the training procedure needed for training the policy or selection strategy of the active learning agent.

In Figure 1, the lower compute path is pertaining to training a semi-supervised model for a classification prediction task. The metadata of data samples generated from the semi-supervised model from the raw input data (such as feature representations or model predictions) is used for transforming the input training data into the state-space representation of active learning agent, either in form of a knowledge graph or transition matrix, on the basis of similarity between data samples. Given a state-space representation as input to the policy network of the active learning agent, the weights of the policy network are adjusted to optimize for improving the prediction KPI (such as improving accuracy, minimizing entropy) on the test hold-out dataset. The improvement in KPI performance on the test dataset is known as the reward which the agent aims to maximize. With every training iteration, the agent suggests a selection of unlabelled samples based on its current policy, and the Oracle reveals the corresponding labels. The quality of the action suggested by the policy is evaluated based on the corresponding reward received due to the revealing of the suggested samples. The agent has also a memory buffer to remember past states, actions and corresponding rewards. This information may be used for improving policy training performance, using techniques such as experience relay in reinforcement learning.

It is possible to train the policy network on a dataset where all samples are actually labeled but are initially observed as unlabelled by the agent. Using the training framework in Figure 1, the agent only is revealed labels which its policy has queried for annotation from the Oracle. The advantage of this is to train the policy network in simulation, which is typically much quicker to iterate different training scenarios than in real scenarios. The trained policy network can then be used on other applications where the data labels are scarce, by the means of transfer-learning.

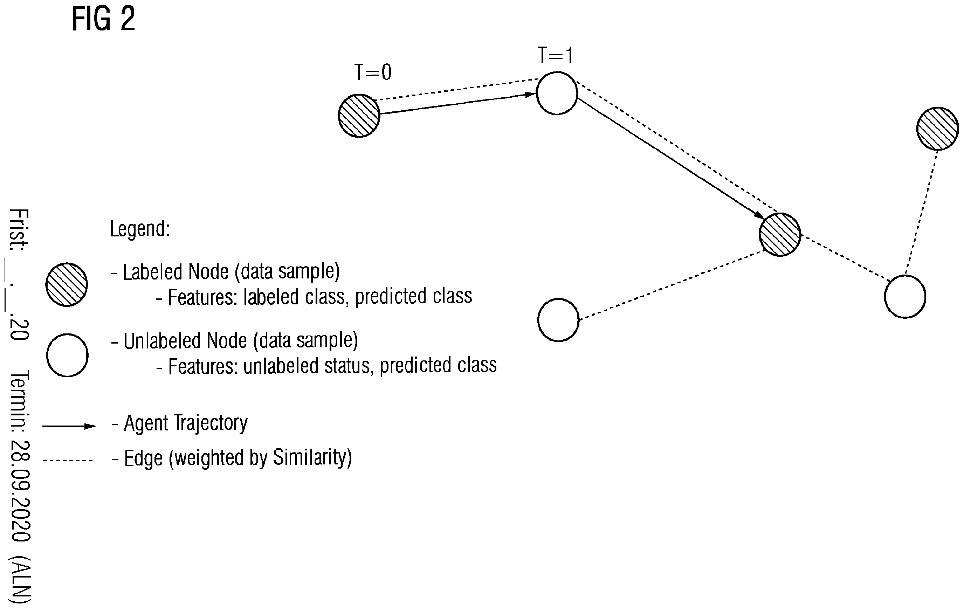

For training the policy network of the active learning agent in a reinforcement learning setting, a definition of a state-space, action space and policy network architecture is required. The following Figures 2-4 are respective examples of definitions of the state-space and action space and policy network architecture.

Fig. 2 illustrates an example of the state space representation of the active learning agent. In Figure 2, an example of the state space representation of the active learning agent is shown as a knowledge graph. The nodes of the graph correspond to data samples. Features of the nodes can be constructed from model predictions or feature representations computed from the semi-supervised model. Nodes are connected by edges based on the extent of similarity. The agent is able to traverse the edges of the graph, in a stepwise manner. For example in Figure 2, at time T=0, the agent is currently located at a node and at the next time step, T=1, the agent traverses to a subsequent neighboring node. The arrow shown in Figure 2 indicates the direction of traversal between the two nodes. The choice of which node to next traverse to is sampled proportionally to the extent of similarity of the neighboring nodes.

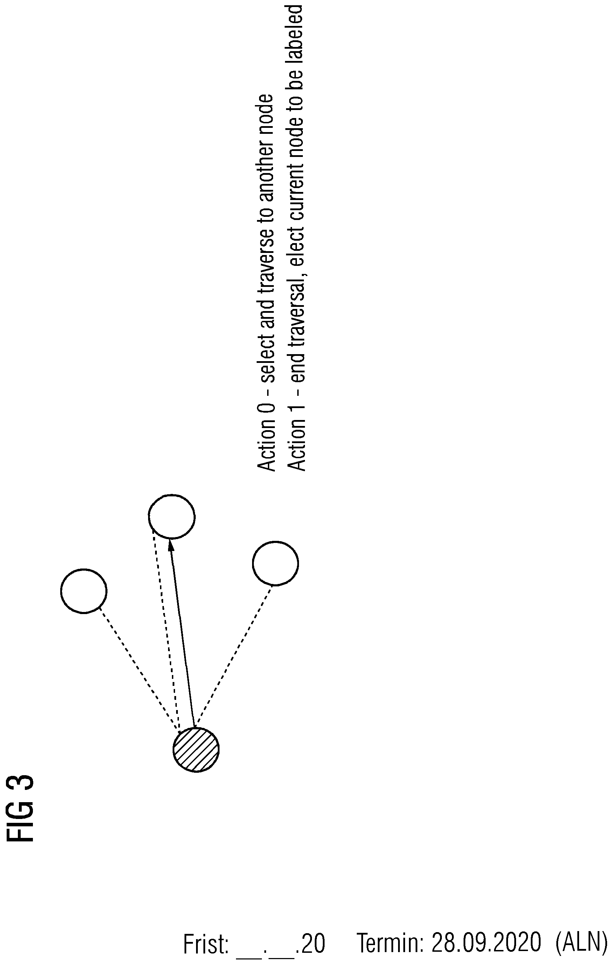

Figure 3 illustrates the corresponding action space of the active learning agent. The agent is able to conduct two actions, to consider other data samples for labelling or to elect a data sample for labelling. The possible edges for traversal are denoted by a dotted line. The chosen choice of traversal is depicted with a directed arrow, where the direction of the arrow indicates the subsequent traversal to another node.

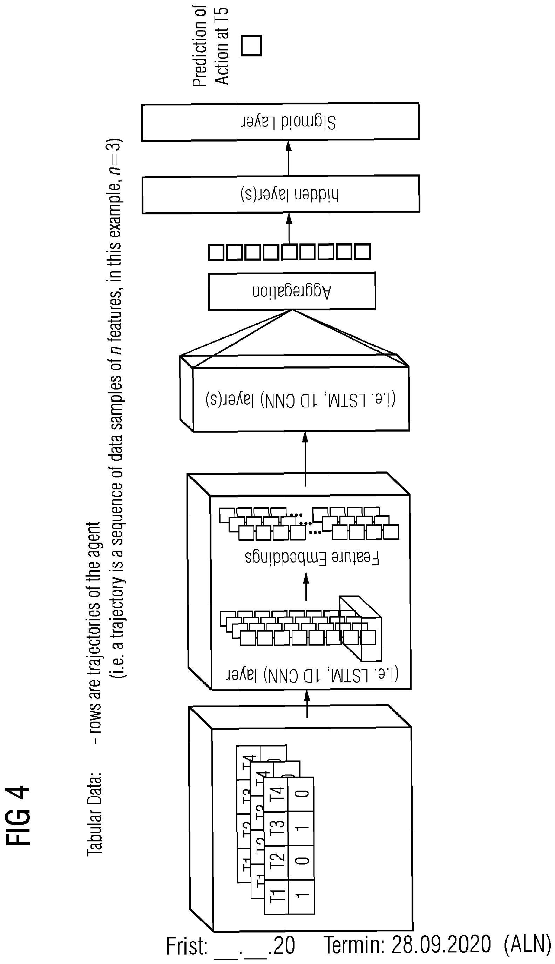

Fig. 4 illustrates an example of the policy network architecture of the active learning agent. A policy network is trained to map the state space observations to actions within the action space. In Figure 4, an example of a policy network architecture is shown where the agent is trained to conduct a policy guided walk on the knowledge graph. Given a trajectory of the agent, which is a sequence of nodes which the agent has visited, a sequence neural network is trained and used to predict the binary action of revealing a sample or not. The weights of the policy network are adjusted based on the reward of the predicted action.

Exemplary use cases comprise:
- A user or oracle which labels the output subset. Alternatively, the labelling can be automatically performed by a labelling unit of the technical system without any human interaction.
- A machine learning model using the labelled output subset for a prediction task.
- Knowledge graph encompassing the information related to the labelled or unlabeled data sets of the method according to the invention and/or metadata generated using the machine learning model.
- An evaluation framework for evaluating the predictive performance of the machine learning model.
- An evaluation framework for evaluating the recommendation performance of the active learning agent.
- A training interface which can train or re-train the machine learning model to consider (newly or additional) labeled data.

### Reference signs

- 1: Active learning agent
- 10: input interface
- 20: active learning unit

## Claims

1. Active learning agent (1) for learning at least one strategy, comprising:
a. an input interface (10), configured for receiving an input data set; comprising
a plurality of labelled sample pairs and a plurality of unlabelled sample pairs; wherein
the input data set is associated with a semi-supervised machine learning model;
b. a transforming unit, configured for transforming the received input data set into a transformed input data set in form of a transition matrix or knowledge graph; and
c. an active learning unit (20), configured for learning the at least one strategy based on the transformed input data set using reinforcement learning; wherein
the at least one strategy is a strategy for selecting an output subset of the plurality of unlabelled sample pairs of the input data set; and
d. an output interface, configured for providing the output subset.

2. Active learning agent (1) according to claim 1, wherein the transformed input data set is a knowledge graph.

3. Active learning agent (1) according to claim 2, wherein the strategy is a policy-guided walk on the knowledge graph which is optimized to traverse the knowledge graph.

4. Technical system comprising the active learning agent according to any of the preceding claims.

5. Technical system according to claim 4, further comprising at least one further agent or unit with at least one labelling unit, configured for labelling the output subset of the plurality of unlabelled sample pairs of the input data set.
